# EUROPEAN PATENT SPECIFICATION

(11) **EP 3 244 733 B1**
(45) Date of publication and mention of the grant of the patent: **26.06.2019**
(21) Application number: 16700125.4
(22) Date of filing: 08.01.2016
(51) Int. Cl.: A01N 25/30, A01N 59/06, A01P 1/00

(54) **ANTIMICROBIAL COMPOSITION FOR HARD SURFACE CLEANING**
ANTIMIKROBIELLE ZUSAMMENSETZUNG FÜR DIE REINIGUNG HARTER OBERFLÄCHEN
COMPOSITION ANTIMICROBIENNE POUR LE NETTOYAGE D'UNE SURFACE DURE

(30) Priority: 16.01.2015 EP 15151460
(43) Date of publication of application: 22.11.2017
(73) Proprietor: Unilever NV, 3013 AL Rotterdam (NL); Unilever PLC, London, Greater London EC4Y 0DY (GB)
(72) Inventor: DAGAONKAR, Manoj, Vilas, Bangalore 560066 (IN); LEWIS, Emma, Wirral Bebington (GB); MEDEPALLI, Srilaxmi, Venkata, Bangalore 560066 (IN); NADAKATTI, Suresh, Murigeppa, Bangalore 560066 (IN)
(74) Representative: Corsten, Michael Allan
(86) International application number: PCT/EP2016/050258
(87) International publication number: WO 2016/113191

(56) References cited:
- WO-A2-02/46341
- US-A- 3 799 902
- US-A- 4 126 574
- ZA-A- 9 700 280

## Description

### Field of the invention

The invention relates to a composition for cleaning hard surfaces and particularly to a composition having antimicrobial activity.

### Background of the invention

An effective disinfectant or antimicrobial agent is one which when used at very low levels causes about 100,000 fold (i.e., 5 log) or even greater reduction in the number of viable microorganisms in a specified culture. This activity or efficacy is generally expressed in terms of the log kill or the log reduction value.

Compositions which provide hygiene generally include one or more surfactant and one or more antimicrobial agent. Toilets and bathrooms are amongst the usual places where bacteria proliferate rapidly. Liquid disinfectants and cleaning compositions are widely used to clean such places. Some more common hard surfaces that are cleaned by such compositions include utensils, floors, walls, windows, doors, table tops and other furniture.

Surfactants are weak biocides. Therefore it is common to include antimicrobial agents in hard surface cleaning compositions which contain surfactants. The composition also contains a medium or a carrier comprising solvents or paste/gel-forming ingredients.

Hydrogen peroxide is an environment-friendly antimicrobial agent but needs to be in contact with the surface for longer time or the user needs to ensure that its concentration is high enough. Popular disinfecting and sanitizing agents like bleach and phenols are also widely used but they are very strong and are often considered to be equally harsh.

However, not all commercially available cleaning products are effective equally against Gram positive and Gram negative bacteria. The ones which are effective are usually so at significantly higher concentration.

WO02/080668 A1 (Kimberly Clark Co) discloses that combination of a proton donating agent with alkyl phosphates leads to an effective antimicrobial. In particular, it discloses antimicrobial action of citric and malic acid and mono alkyl phosphate against S. *aureus, S. epidermidis* and *E.coli.* These are some of the most common Gram positive and negative bacteria.

Our co-pending European application EP13194832.5 discloses a composition which has an inorganic alkaline material having pH > 11 and reserve alkalinity > 45 in 1% solution. In addition there is an abrasive having Mohs' index > 3.5. The composition is effective against tough soil and stains. The composition also contains 5 to 50 wt% anionic surfactant.

South African patent ZA9700280 (Unilever, 1998) discloses a soap bar containing 2% sodium lauryl ether sulphate (SLES) and 3% sodium aluminate. Table-1 of this patent discloses the starting materials for a finished product. The sodium aluminate reacts with alkaline silicate leading to *in-situ* generation of sodium aluminosilicate in the disclosed detergent bar which is the finished product. Therefore the finished product does not have any aluminate.

WO0246341 A2 (Unilever) discloses a process for the manufacture of low density detergent compositions with in situ generation of borosilicate as a structuring system, in presence of an aluminium and/or phosphate salt to obtain boroaluminosilicate or boroaluminophospho-silicate and it is said to impart superior properties such as good process ability, in-use properties and improved water retention capacity.

US3799902 A (Nalco Chemical Co) discloses coating compositions comprising sodium aluminate, polymeric latex composed of anionic vinyl addition polymer, a water-soluble cationic polymer. The coating compositions are in the form of films which may be cast on glass, metals, fibres such as cloth and paper.

US4126574 (Henkel) discloses cation-exchanging, water-insoluble aluminosilicates containing bound water and an ionic surface-active compound resistant to water hardness formers. It is produced by the precipitation of aluminosilicate in an aqueous solution in the presence of an aqueous solution of the ionic surface-active compound.

There is an unmet need for hard surface cleaning compositions which provide broad-spectrum antibacterial action without necessary use of commercial antibacterial agents. Such products are particularly useful for household cleaning.

### Summary of the invention

It has now been determined that the technical problem described herein can be solved by way of a composition containing a small quantity of a non-soap surfactant and a small quantity of a particular alkaline builder. The composition surprisingly provides broad spectrum antibacterial benefits. This property makes the compositions according to the invention highly suitable for cleaning hard surfaces in a safe and effective manner. In view of the significantly lower surfactant content, practically no foam is generated during use.

In accordance with a first aspect is disclosed an antimicrobial composition having total fatty matter less than 10 wt%, the composition includes:
(i) 0.0001 to 5 wt% non-soap surfactant which is at least one of anionic, amphoteric or cationic surfactant; and,
(ii) 0.25 to 5 wt% sodium aluminate.

Preferably the ratio between total non-soap surfactant content and the total sodium aluminate content is from 1:0.4 to 1:20000 parts by weight.

In accordance with a second aspect is disclosed use of a composition of the first aspect for providing broad spectrum antibacterial action.
The invention will now be explained in details.

### Detailed description of the invention

In the context of the present invention, by home or place of work (e.g., office) surface is meant any kind of surface such as kitchen, bathroom, floor, carpet, wall, tile, window, cupboard, sink, shower, wash basin, WC, fixtures and fittings made of ceramic, vinyl, linoleum, melamine, glass, Formica®, vitroceramic, plastic, plastified wood, metal or any painted or varnished surface. The surfaces also include household appliances including, but not limited to refrigerators, freezers, washing machines, automatic dryers, ovens, microwave ovens and dishwashers.

### Total fatty matter

This term is often abbreviated as TFM and it denotes the percentage by weight of fatty acid and triglyceride residue present in a composition without taking into account the accompanying cations. This term is usually associated with soap (personal wash or laundry) bars which contain high amount of soap, i.e., saponified fatty acids. Usually the TFM content of any composition is attributed to or indicates, more or less, the soap content. However, even surfactants like sodium lauryl ether sulphate and linear alkyl benzenesulphonates also add to the total TFM content.

### Non-soap Surfactant

The term non-soap means that the surfactant is not soap-based.

Preferred compositions contain 0.00025 to 5 wt% non-soap surfactant and more preferred compositions contain 0.0005 to 4 wt% non-soap surfactant.

The non-soap surfactant is other than non-ionic because it is found that compositions containing non-ionic surfactant and sodium aluminate do not show appreciable activity against Gram positive and negative bacteria at lower levels of non-ionic surfactant and sodium aluminate.

The non-soap surfactant is at least one of anionic, amphoteric or cationic surfactant, but it can also be any combination of any two or more of the above-mentioned types of surfactants.

The non-soap surfactant is included for primary cleaning action by emulsification of oil/oily residue attached to the concerned substrate.

In general, these surfactants are described in well known textbooks like "Surface Active Agents" Vol. 1, by Schwartz & Perry, Interscience 1949, Vol. 2 by Schwartz, Perry & Berch, Interscience 1958, and/or the current edition of "McCutcheon's Emulsifiers and Detergents" published by Manufacturing Confectioners Company or in "Tenside-Taschenbuch", H. Stache, 2nd Edn., Carl Hauser Verlag, 1981.

It is preferred that the non-soap surfactant is anionic surfactant. In such cases it is preferred that the composition contains 0.2 wt% to 3.0 wt% anionic surfactant. More preferred compositions contain 1.0 wt% to 3.0 wt% anionic surfactant.
It is preferred that the anionic surfactant is one or more of linear alkylbenzene sulphonate, an alkoxylated sulphate, an alpha olefin sulphonate or a sulphonated ester.

Examples of preferred anionic surfactants include linear or modified, e. g., branched, alkylbenzene sulphonates, alkylpoly(ethoxylates), sodium lauryl ether sulphate, methyl ester sulphonate and primary alkyl sulphates. It is particularly preferred that the anionic surfactant is a linear alkyl benzene sulphonate.

Alternatively, the non-soap surfactant is an amphoteric surfactant. Suitable amphoteric surfactants include derivatives of aliphatic secondary and tertiary amines containing an alkyl group of 8 to 18 carbon atoms and an aliphatic radical substituted by an anionic water-solubilising group, such as sodium 3-dodecylamino-propionate, sodium 3-dodecylaminopropane sulphonate and sodium N-2-hydroxydodecyl-N-methyltaurate. Further suitable amphoteric surfactants include derivatives of aliphatic quaternary ammonium, sulphonium and phosphonium compounds having an aliphatic radical of from 8 to 18 carbon atoms and an aliphatic radical substituted by an anionic water-solubilising group, for instance 3-(N-N-dimethyl-N-hexadecylammonium) propane-1-sulphonate betaine, 3-(dodecylmethyl sulphonium) propane-1-sulphonate betaine and 3-(cetylmethylphosphonium) ethane sulphonate betaine.

It is particularly preferred that the amphoteric surfactant is a betaine. Cocoamido propyl betaine is a preferred betaine.

In compositions which contain amphoteric surfactant as the sole non-soap surfactant, it is preferred that the composition contains 0.2 wt% to 1 wt% amphoteric surfactant.

Further alternatively the non-soap surfactant is a cationic surfactant. In case of compositions which contain a cationic surfactant as the sole non-soap surfactant, it is preferred that such compositions contain 0. 0025 wt% to 0.1 wt% cationic surfactant.

Preferred cationic surfactants are quaternary ammonium surfactants. It is preferred that the cationic surfactant is a alkyl trimethyl ammonium halide, especially cetyl trimethyl ammonium chloride.

Alternatively it is preferred that the cationic surfactant is a benzalkonium halide, more preferably benzalkonium chloride.

### Sodium aluminate

The composition contains 0.25 to 5 wt% sodium aluminate. It is an inorganic alkaline material (alkaline builder) having pH > 11 and reserve alkalinity > 45 in 1% aqueous solution. The composition is highly alkaline due to presence of sodium aluminate.

More preferred compositions have 0.5.to 4 wt% of sodium aluminate.

It is preferred that ratio of the total non soap surfactant content to the total sodium aluminate content in the composition is from 1:0.4 to 1:20000 parts by weight. It is further preferred that this ratio is from 1:0.4 to 1:2000 and further more preferably from 1:0.4 to 1:1000 parts by weight. These ratios provide broad spectrum antibacterial activity at lower concentration of surfactant and aluminate.

While the abovementioned range of ratio broadly applies to combination of any non-soap surfactant and sodium aluminate, specific preferred ratios apply in the case of certain types of non-soap surfactants.

When the non-soap surfactant is solely an anionic surfactant, especially linear alkyl benzene sulphonate, it is preferred that the ratio is from 1:0.66 to 1:25 parts by weight. The ratio is towards the lower end of 1:0.66 parts by weight in the case of compositions which contain more surfactant. For example, the preferred ratio is 1:1.5 to 1:1.8 at linear alkyl benzene sulphonate content of 2.0 wt%. On the other hand, the ratio is 1.0.66 to 1:1.2 at linear alkyl benzene sulphonate content of 3.0 wt%.

Where the compositions in accordance with this invention contain anionic surfactant as the sole surfactant, then it is preferred that such compositions contain 0.2 wt% to 3 wt% anionic surfactant and 1 wt% to 5 wt% sodium aluminate.

Where the compositions in accordance with this invention contain cationic surfactant as the sole surfactant, then it is preferred that such compositions contain 0.00025 wt% to 0.001 wt% cationic surfactant and 0.25 wt% to 0.5 wt% sodium aluminate.

When the non-soap surfactant is solely a cationic surfactant, especially benzalkonium halide and particularly benzalkonium chloride, the preferred ratio is from 1:250 to 1:2000.

Where the compositions in accordance with this invention contain amphoteric surfactant as the sole surfactant, then it is preferred that such compositions contain 0.01 wt% to 0.5 wt% amphoteric surfactant and 0.25 wt% to 0.5 wt% sodium aluminate.

### Carrier

Preferred compositions in accordance with the invention also contain a carrier. The carrier could be any ingredient or combination of ingredients which serve as a base for the composition. The carrier can be water. In such cases the preferred compositions have 10 to 99 wt% water or even more water to make up the balance of the composition to 100 wt%. Non-limiting examples of other carriers include other common paste/gel forming ingredients. These ingredients would vary based on the nature of the composition.

### Abrasive

The composition may preferably also have an abrasive or combination of abrasives. The abrasive may be soluble or insoluble in water. Water soluble abrasives are usually present in such excess to the quantity of water present in the composition that solubility of the abrasive in the aqueous phase is exceeded and consequently the abrasive exists in the composition.

When present, it is preferred that Moh's index of the abrasive is at least 3.0.

Preferred abrasives include calcite, dolomite, feldspar, silica, aluminium oxide, amalgam, anatase, apatite, boron carbide, corundum (natural aluminium oxide), crystolon, cuttlebone, diamond, diopside, emery, enamel, enstatite, fluorite, garnet, glass bead, glass, hematite, kyanite, magnetite, olivine, orthoclase, petalite, porcelain, feldspathic , pyrite, pumice, quartz, silica sand, silicon carbide, spinel, spodumene, staurolite, topaz, titanium dioxide, tungsten carbide, zirconium silicate, zirconia, particulate zeolites, silicates, other carbonates, bicarbonates, borates, sulphates and polymeric materials such as polyethylene.

Calcite, dolomite, feldspar, alumina and silica are the most preferred abrasives.

Whenever an abrasive is present, it is preferred that the compositions according to the invention contain 20 wt% to 70 w% abrasive.

### The pH of the composition

It is preferred that pH of 1% aqueous solution of the hard surface cleaning composition at 25 °C is from 10 to 13.

### Other ingredients

The hard surface cleaning composition may further have other conventional ingredients like perfume, colour, electrolytes, structuring agents and fillers. The conventional ingredients could vary depending on the nature of the composition.

### Use of the composition

In a second aspect, the invention relates to use of an antimicrobial composition of the first aspect as a broad spectrum antibacterial agent on an inanimate hard surface.
In accordance with yet another aspect is disclosed an antimicrobial composition of the first aspect for use as a broad spectrum antibacterial agent.

It is preferred that the composition provides at least 5 log reduction in bacterial count of at least some Gram positive bacteria and at least some Gram negative bacteria.

It is further preferred that the composition provides at least 5 log reduction in bacterial count of at least one of *S. aureus* and *E.hirae* and at least one of *E*. *coli* and *P. aeruginosa.*

By broad spectrum is meant that the composition acts against Gram positive as well as Gram negative bacteria.

Gram-positive bacteria belong to a class of bacteria that take up crystal violet stain used in the Gram staining method of bacterial differentiation. The thick peptidoglycan layer in the cell wall that encases their cell membrane retains the stain making definitive identification possible.

Gram-negative bacteria do not retain the violet stain after the decolorization step, as alcohol used in the decolourisation process degrades the outer membrane of gram-negative cells making the cell wall more porous and incapable of retaining the crystal stain.

*S. aureus* and *E.hirae are* well known bacteria of the positive type. *E. coli and P. aeruginosa* are well-known examples of the negative type.

### Product format

The composition may be in the form of a aqueous or non-aqueous liquid, bar, powder, cream, paste or gel.

The composition may be packaged in bottles or pouches or in a jar, box, tray or pouch.

The bottle, jar and the pouch containing the product can be of any suitable size and shape to accommodate varied quantities of the product. Bottles, jars and pouches are preferably provided with a dispenser with or without a closure. This provides easier mode of dispersion and storage for liquid, paste or gel type of compositions. Dispensers with a push-pull closure or a flip-top closure may also be used. Spray or pump-dispensers may also be used.

The composition may be applied in any known manner such as by using an applicator like cloth, paper, mop, wipes, sponge, scrub, spray, atomizer, or other forms of direct application.
The invention will now be explained with the help of non-limiting examples.

### EXAMPLES

### Method of preparing composition according to the invention

### Preparation of an aqueous composition:

In order to prepare the aqueous composition described hereinafter, required quantities (grams) of the respective non-soap surfactant and sodium aluminate are mixed with some water. Thereafter enough water is added to make the total weight of the composition 100 grams.

### Method of determining antibacterial activity

Antibacterial activity of all compositions was tested by following either the method-1 or method-2 as described hereinafter.

### Method 1:

The test bacteria were grown overnight at 37 °C on a TSA (Tryptic Soya Agar) plate. The grown culture colonies were re-suspended in tryptone diluent. The culture density was adjusted to get the final count of 1.5-5.0 x 10⁸ cfu/ml based on McFarland standards (McFarland 1.5 measured using bioMérieux Densomat®). 240 µl of the test solution was placed into test wells in a micro-titre plate. Equal volumes of test culture and bovine serum albumin (interfering substance) were combined for two minutes, before 60 µl of the mixture being added to the test solution. After a contact time of five minutes, 30 µl of the mixture was taken and added to a neutralising solution. This solution was then serially diluted in tryptone soya broth and then spot-plated onto TSA plates. After absorption, the plates were incubated at 37 °C for 24 hours and the residual colonies were counted. All the experiments were performed under aseptic conditions and all media were autoclaved at 103421 Pa (15 psi) before use. The extent of log reduction in the bacterial count was calculated by taking into account the difference between initial and final cfu/ml values.

### Method 2:

The test bacteria were grown overnight at 37 °C on TSA plate. The grown culture colonies were re-suspended in 0.8% saline solution. The culture density was adjusted to get final count of 1 x 10^8 cfu/ml based on a 620 nm optical density calibration chart (0.8 OD at 620 nm). Nine ml of the test solution was taken in a sterile sample container with the actives at the specific combinations and 1 ml of the test culture was added. After a contact time of five minutes, 1 ml of the mixture was taken and added to a neutralizing solution, D/E broth. This solution was then serially diluted in D/E broth and then plated using TSA. After solidification, the plates were incubated at 37 °C for 48 hours and the residual colonies were counted. All the experiments were performed under aseptic condition under laminar air flow and all the media were autoclaved at 15 psi (103421 Pa) before use. The extent of log reduction in the bacterial count was calculated by taking into account the difference between initial and final cfu/ml values.

### Example 1: Outside the invention (Comparative Examples)

This experiment was done to determine the extent of log reduction brought about by only a non-soap surfactant, other than non-ionic surfactant, and also only by sodium aluminate. The balance of the composition in each case was water (q.s.). The TFM of each composition was less than 10 wt%. The compositions having surfactant did not have sodium aluminate and *vice versa.* Tests were performed in accordance with Method-1. The observed log reduction in bacterial count is summarised in table 1.

**Table 1**

| wt% | Log reduction | | | |
|---|---|---|---|---|
| | *S. aureus* | *E.hirae* | *P. aeruginosa* | *E. coli* |
| | Data for Sodium aluminate | | | |
| 0.001 | <1 | <1 | <1 | <1 |
| 0.01 | <1 | <1 | <1 | <1 |
| 0.06 | <1 | <1 | <1 | <1 |
| 0.10 | <1 | <1 | <1 | <1 |
| 0.50 | <1 | <1 | <5 | <5 |
| 1.00 | <1.6 | <1 | 5 | 6 |
| 2.00 | <1.6 | <1 | 5 | 6 |
| 3.00 | <1.6 | <1 | 5 | 6 |
| 3.60 | <1.6 | <1 | 5 | 6 |

| Data for linear alkyl benzene sulphonate | | | | |
|---|---|---|---|---|
| 0.001 | <1 | <1 | <1 | <1 |
| 0.01 | <1 | <1 | <1 | <1 |
| 0.06 | <1 | <5 | <1 | <1 |
| 0.10 | <1 | <5 | <1 | <1 |
| 0.20 | <1 | <5 | <1 | <1 |
| 0.40 | <1 | <5 | <1 | <1 |
| 4.00 | <1 | 6.1 | <1 | <1 |

| Data for sodium lauryl ether sulphate | | | | |
|---|---|---|---|---|
| 0.01 | <1 | <1 | <1 | <1 |
| 0.10 | <1 | <1 | <1 | <1 |
| 0.40 | <1 | <1 | <1 | <1 |
| 0.80 | <1 | <1 | <1 | <1 |
| 4.00 | <1 | <1 | 1.1 | <1 |

| Data for coco amidopropyl betaine | | | | |
|---|---|---|---|---|
| 0.01 | -- | -- | <5 | -- |
| 0.05 | -- | -- | <5 | -- |
| 0.10 | -- | -- | <5 | -- |
| 0.25 | -- | -- | <5 | -- |
| 0.50 | -- | -- | <5 | -- |

The data indicates clearly that log reduction was 5 log or more in only a handful of experiments and that too at higher concentration of the surfactant/aluminate. The inference that can be drawn is that at lower levels, neither the surfactant nor the sodium aluminate alone brings about appreciable log reduction in the count of Gram positive and negative bacteria.

### Example 2: Outside the invention (Comparative Examples)

For sake of comparison, an experiment was also conducted with some compositions containing non-ionic surfactant and sodium aluminate. Details are shown in table 2. The pH of each composition was 11.0.

**Table 2**

| Surfactant | BKC/wt% | Sodium aluminate/wt% | Ratio | Log reduction | |
|---|---|---|---|---|---|
| | | | | *S. aureus* | *P. aeruginosa* |
| Fatty alcohol ethoxylate | 0.05 | 0.25 | 1:5 | <5 | <5 |
| | 0.1 | | 1:2.5 | <5 | <5 |
| | 0.5 | | 1:0.5 | <5 | <5 |
| | 1.0 | | 1:0.25 | <5 | <5 |

The data in table 2 shows that combination of a non-ionic surfactant and sodium aluminate is ineffective as even at very high ratio, there is no appreciable activity against Gram positive and negative bacteria.

### Example 3: Inventive compositions inside the invention containing linear alkyl benzene sulphonate (LAS)

Table 2 contains details of the formulations which were tested. The TFM of each composition was less than 10 wt% and pH was 11.0. The ratio between total surfactant content and the total sodium aluminate content and the extent of log reduction is also included in table 3. The TFM of each composition was less than 10 wt%. The pH of each composition was 11 to 12. Method-1 was followed.

**Table 3**

| LAS/wt% | Sodium aluminate/wt% | Ratio | Log reduction | | | |
|---|---|---|---|---|---|---|
| | | | *S. aureus* | *E. hirae* | *P. aeruginosa* | *E. coli* |
| 0.2 | 0 | 1:0 | <1 | <5 | <1 | <1 |
| | 1.0 | 1:0.5 | <1 | 6 | 6 | 6 |
| | 2.0 | 1:10 | <1 | 6 | 6 | 6 |
| | 3.0 | 1:15 | 1.5 | 6 | 6 | 6 |
| | 3.6 | 1:18 | 2 | 6 | 6 | 6 |
| | 5.0 | 1:25 | 6.2 | 6 | 6 | 6 |
| 0.4 | 0 | 1:0 | <1 | <5 | <1 | <1 |
| | 1.0 | 1:2.5 | <1 | 6 | 6 | 6 |
| | 2.0 | 1:5 | <1 | 6 | 6 | 6 |
| | 3.0 | 1:7.5 | 1.5 | 6 | 6 | 6 |
| | 3.6 | 1:9 | 5.5 | 6 | 6 | 6 |
| 1.0 | 0 | 1:0 | <1 | 6.1 | <1 | <1 |
| | 1.0 | 1:1 | 2.1 | 6.1 | 6.4 | 6.5 |
| | 2.0 | 1:2 | 4.1 | 6.1 | 6.4 | 6.5 |
| | 3.0 | 1:3 | 5.9 | 6.1 | 6.4 | 6.5 |
| | 3.6 | 1:3.6 | 5.9 | 6.1 | 6.4 | 6.5 |
| 2.0 | 0 | 1:0 | <1 | 6.1 | <1 | <1 |
| | 1.0 | 1:0.5 | 1.9 | 6.1 | 6.4 | 6.5 |
| | 2.0 | 1:1 | 4.1 | 6.1 | 6.4 | 6.5 |
| | 3.0 | 1:1.5 | 5.9 | 6.1 | 6.4 | 6.5 |
| | 3.6 | 1:1.8 | 5.9 | 6.1 | 6.4 | 6.5 |
| 3.0 | 0 | 1:0 | <1 | 6.1 | <1 | <1 |
| | 1.0 | 1:0.33 | 1.9 | 6.1 | 6.4 | 6.5 |
| | 2.0 | 1:0.66 | 5.9 | 6.1 | 6.4 | 6.5 |
| | 3.0 | 1:1 | 5.9 | 6.1 | 6.4 | 6.5 |
| | 3.6 | 1:1.2 | 5.9 | 6.1 | 6.4 | 6.5 |

The synergy between LAS and sodium aluminate, when present individually at low levels, is clear from the extent to which the compositions bring about reduction in bacterial count of Gram positive and Gram negative bacteria.

### Example 4: Inventive composition inside the invention with cationic surfactant and sodium aluminate

This set of experiments was performed on benzalkonium chloride (BKC, a cationic surfactant). The TFM of each composition was less than 10 wt%. Method 1 was used to determine the extent of log reduction. The pH of each composition was 11 to 12.

**Table 4**

| Surfactant | BKC/wt% | Sodium aluminate/wt% | Ratio | Log reduction | |
|---|---|---|---|---|---|
| | | | | *S. aureus* | *P. aeruginosa* |
| BKC | 0.00025 | 0.25 | 1:1000 | >5 | >5 |
| | 0.0005 | | 1:500 | >5 | >5 |
| | 0.001 | | 1:250 | >5 | >5 |
| BKC | 0.00025 | 0.5 | 1:2000 | >5 | >5 |
| | 0.0005 | | 1:1000 | >5 | >5 |

Here also, even at significantly lower concentration of the surfactant and sodium aluminate, there is appreciable log reduction of one Gram positive and one Gram negative bacterium.

The illustrated examples indicate clearly how the need for hard surface cleaning compositions which provide broad-spectrum antibacterial action without necessary use of commercial antibacterial agents is met.

## Claims

1. An antimicrobial composition having total fatty matter less than 10 wt%, said composition comprising:
(i) 0.0001 to 5 wt% non-soap surfactant which is at least one of anionic, amphoteric or cationic surfactant; and,
(ii) 0.25 to 5 wt% sodium aluminate.

2. A composition as claimed in claim 1 wherein ratio of the total non-soap surfactant content to the total sodium aluminate content is from 1:0.4 to 1:20000.

3. A composition as claimed in claim 1 or 2 wherein said anionic surfactant is a linear alkylbenzene sulphonate, an alkoxylated sulphate, an alpha olefin sulphonate or a sulphonated ester.

4. A composition as claimed in claim 1 or 2 wherein said amphoteric surfactant is a betaine.

5. A composition as claimed in claim 1 or 2 wherein said cationic surfactant is a quaternary ammonium surfactant.

6. Use of an antimicrobial composition of any one of claims 1 to 5 as a broad spectrum antibacterial agent on an inanimate hard surface.

7. Use as claimed in claim 6 wherein said composition provides at least 5 log reduction in bacterial count of at least some Gram positive bacteria and at least some Gram negative bacteria.

8. Use as claimed in claim 7 wherein said composition provides at least 5 log reduction in bacterial count of at least one of *S. aureus* and *E.hirae* and at least one of *E. coli* and *P. aeruginosa.*

9. An antimicrobial composition as claimed in any one of claims 1 to 5 for use as a broad spectrum antibacterial agent.

## Patentansprüche

1. Antimikrobielle Zusammensetzung, die gesamte Fettsubstanz von weniger als 10 Gew.-% aufweist, wobei die Zusammensetzung umfasst:
(i) 0,0001 bis 5 Gew.-% Nicht-Seifen-Tensid, das mindestens eines von anionischem, amphoterem oder kationischem Tensid ist; und
(ii) 0,25 bis 5 Gew.-% Natriumaluminat.

2. Zusammensetzung, wie im Anspruch 1 beansprucht, wobei das Verhältnis des Gesamtgehalts an Nicht-Seifen-Tensid zu dem Gesamtgehalt an Natriumaluminat von 1:0,4 bis 1:20000 beträgt.

3. Zusammensetzung, wie im Anspruch 1 oder 2 beansprucht, wobei das anionische Tensid ein lineares Alkylbenzolsulfonat, ein alkoxyliertes Sulfat, ein alpha-Olefinsulfonat oder ein sulfonierter Ester ist.

4. Zusammensetzung, wie im Anspruch 1 oder 2 beansprucht, wobei das amphotere Tensid ein Betain ist.

5. Zusammensetzung, wie im Anspruch 1 oder 2 beansprucht, wobei das kationische Tensid ein quaternäres Ammonium-Tensid ist.

6. Verwendung einer antimikrobiellen Zusammensetzung nach irgendeinem der Ansprüche 1 bis 5 als antibakterielles Breitspektrummittel auf einer unbelebten harten Oberfläche.

7. Verwendung, wie im Anspruch 6 beansprucht, wobei die Zusammensetzung mindestens eine 5 log-Reduktion in der Keimzahl von mindestens einigen grampositiven Bakterien und mindestens einigen gramnegativen Bakterien liefert.

8. Verwendung, wie im Anspruch 7 beansprucht, wobei die Zusammensetzung mindestens eine 5 log-Reduktion in der Keimzahl von mindestens einem von S. aureus und E. hirae und mindestens einem von E. coli und P. aeruginosa liefert.

9. Antimikrobielle Zusammensetzung, wie in irgendeinem der Ansprüche 1 bis 5 beansprucht, zur Verwendung als antibakterielles Breitspektrummittel.

## Revendications

1. Composition antimicrobienne ayant une matière grasse totale inférieure à 10 % en poids, ladite composition comprenant :
(i) 0,0001 à 5 % en poids d'un tensioactif non savon qui est au moins un de tensioactif anionique, amphotère ou cationique ; et
(ii) 0,25 à 5 % en poids d'aluminate de sodium.

2. Composition selon la revendication 1 où le rapport de la teneur totale en tensioactif non savon à la teneur totale en aluminate de sodium est de 1 : 0,4 à 1 : 20000.

3. Composition selon la revendication 1 ou 2 où ledit tensioactif anionique est un alkylbenzènesulfonate linéaire, un sulfate alcoxylé, un alpha oléfine sulfonate ou un ester sulfoné.

4. Composition selon la revendication 1 ou 2 où ledit tensioactif amphotère est une bétaïne.

5. Composition selon la revendication 1 ou 2 où ledit tensioactif cationique est un tensioactif ammonium quaternaire.

6. Utilisation d'une composition antimicrobienne selon l'une quelconque des revendications 1 à 5 comme agent antibactérien à large spectre sur une surface dure inanimée.

7. Utilisation selon la revendication 6 où ladite composition procure une réduction d'au moins 5 log dans la numération bactérienne d'au moins certaines bactéries Gram positives et d'au moins certaines bactéries Gram négatives.

8. Utilisation selon la revendication 7 où ladite composition procure une réduction d'au moins 5 log dans la numération bactérienne d'au moins un de *S. aureus* et *E*. *hirae* et d'au moins un de *E*. *coli* et *P. aeruginosa.*

9. Composition antimicrobienne selon l'une quelconque des revendications 1 à 5 destinée à être utilisée comme agent antibactérien à large spectre.
